Europäisches Patentamt

(19) European Patent Office

Office européen des brevets

(11) Publication number: **0 235 861**
**B1**

# EUROPEAN PATENT SPECIFICATION

(45) Date of publication of the patent specification:
14.11.90

(21) Application number: 87200309.0

(22) Date of filing: 25.02.87

(51) Int. Cl.⁵: **G01B 11/26,** G01M 11/02, G02B 27/62

(54) **Device for detecting a centring error.**

(30) Priority: 03.03.86  NL 8600526

(43) Date of publication of application:
09.09.87 Bulletin 87/37

(45) Publication of the grant of the patent:
14.11.90 Bulletin 90/46

(84) Designated Contracting States:
CH DE FR GB LI

(56) References cited:
EP-A- 0 011 708
EP-A- 0 120 329
FR-A- 2 561 377

FEINWERKTECHNIK & MESSTECHNIK, vol. 85, no. 2,
March 1977, pages pages 82-85, München, DE; H. VON
MINTROP et al.: "Interferometrische Winkelmessungen
in grossen messbereichen"
PROCEEDINGS OF THE SOCIETY OF PHOTO-OPTICAL
INSTRUMENTATION ENGINEERS-OPTICAL
ALIGNMENT, San Diego, California, 29th-21st July 1980,
vol. 251, pages 63-70, The Society of Photo-Optical
Instrumentation Engineers, Washington, US; R.A.
FIELD: "Heterodyne interferometer for alignment of the
two elements of a reflaxicon" 000

(73) Proprietor: N.V. Philips' Gloeilampenfabrieken,
Groenewoudseweg 1, NL-5621 BA Eindhoven(NL)

(72) Inventor: Bouwhuis, Gijsbertus, c/o INT.
OCTROOIBUREAU B.V. Prof. Holstlaan 6, NL-5656 AA
Eindhoven(NL)
Inventor: Braat, Josephus Johannes Maria, c/o INT.
OCTROOIBUREAU B.V. Prof. Holstlaan 6, NL-5656 AA
Eindhoven(NL)

(74) Representative: Cobben, Louis Marie Hubert et al,
INTERNATIONAAL OCTROOIBUREAU B.V. Prof.
Holstlaan 6, NL-5656 AA Eindhoven(NL)

## Description

The invention relates to a device for detecting a centring error of a rotationally symmetrical surface of an object, which device comprises a radiation source for exposing a small portion of the surface, a rotatable holder for the object and a radiation-sensitive detection system arranged in the path of a beam originating from the surface and supplying a signal which is a measure of the centring error with respect to the rotational axis of the holder.

A device of this type is used, for example, for centring a lens element in its holder before this element is fixed in the holder. Particularly when composing a lens system comprising a large number of lens elements such as a projection lens system, it is important to align each of the lens elements accurately, that is to say, to ensure that the optical axis of each lens element accurately coincides with a reference axis, which is generally the axis of the holder in which all lens elements must be arranged. In the assembly of such a lens system a first lens element is centred with respect to a reference axis and is fixed, subsequently a second lens element is centred with respect to the same reference axis and is fixed,and so forth until all lens elements are fixed in the holder. Each of the refractive surfaces of each lens element must be centred separately. In the case of a spherical surface this means that it must be ascertained whether the centre of curvature of the relevant surface is located on the reference axis. The different rotationally symmetrical sectors of an aspherical rotationally symmetrical surface have different centres of curvature which are located on one line. Centring of such a surface means that coincidence of this line with the reference axis is to be ensured.

In order to detect a centring error the lens element may be rotated around an axis which coincides with the reference axis and a radiation beam can be directed onto the surface to be centred. If the lens surface is not correctly centred with respect to the rotational axis, this surface will make an oscillatory movement. This movement can be detected by a radiation-sensitive detection system arranged in the path of a beam reflected by the surface, which system in principle supplies one output signal, but suitably more and preferably four output signals. By processing these signals in the correct manner the movement of the radiation spot formed on the detection system and hence the movement of the beam and consequently also the centring error of the lens surface can be detected.

A radiation-sensitive detection system of this type may be in the form of, for example, a so-called four-quadrant detector consisting of four separate detectors which are arranged in the four quadrants of an imaginary X-Y system of coordinates. When using such a detector, however, the radiation spot must be pre-aligned with respect to the detector in order that the radiation spot is not imaged on only one or two of the detectors in the case of correct centring of the lens surface.

The radiation-sensitive detection system may also be in the form of a so-called two-dimensional position-sensitive photo diode. Such a photo diode comprises a single semiconductor element having two electrodes or, in the case of a two-dimensional photo diode, four electrodes in which the difference between the output signals at two facing electrodes is a measure of the position of the centre of the intensity profile of a radiation spot formed on this photo diode along the axis connecting the two electrodes. The signals which are supplied by such a position-sensitive photodiode are, however, not only dependent on the position of the radiation spot on this photo diode but also on the intensity variation in the radiation beam.

When used in the device described, both the four-quadrant detector and the position-sensitive photodiode supply signals having a small signal-to-noise ratio due to the low intensity of the radiation spot on these detectors. This low intensity is the result of the low reflection coefficient of the surface to be centred. The said device using a four-quadrant detector or a position-sensitive photodiode is less suitable in practice for high-precision centring of a lens surface. Moreover, the centring error signal in the device described may be affected by irregularities in the lens surface, for example, by errors in the coating of this surface.

The present invention has for its object to provide a device for detecting centring errors which does not have the said drawbacks, is better usable in practice and is more accurate. The device according to the invention is characterized in that a beam splitter for splitting the radiation beam into two measuring sub-beams and for combining the two sub-beams after they have been reflected by the surface is arranged in the radiation path between the radiation source ad the surface to be centred, in that a lens system directing the sub-beam at angles of approximately 90° onto the surface is arranged between the beam splitter and the surface and in that output signal supplied by the radiation-sensitive detection system, upon occurrence of a centring error, shows a variation synchronously with the object rotation, which output signal variation represents a variation in phase difference, caused by a centring error, between the two sub-beams.

In this device it is no longer the intensity variation in the detection surface which is determined, which variation is caused by the beam movement, but it is the variation of the phase difference between the two sub-beams which is detected, which phase difference is dependent on the oscillation of the rotating surface. This variation can also be measured with great accuracy of smaller intensities of the sub-beams. Besides, when using phase detection, the resolving power is greater than when using intensity or amplitude detection. Furthermore local reflection differences of the surface to be centred or of the optical elements in the device have substantially no influence on the centring error signal.

A first embodiment of the device is further characterized in that the beam splitter comprises a semi-transparent polarisation-sensitive or insensitive mirror in the beam and at least one fully reflecting mirror in the path of at least one of the sub-beams. It must then be ensured that the mirrors are not pivotable.

An alternative could be the use of a diffraction grating as a beam splitter. However, the diffraction grating causes additional radiation loss.

The preferred embodiment of the device according to the invention in which the radiation loss is minimum and which is very stable is further characterized in that the beam-splitting element is a Wollaston prism, in that the beam originating from the source and entering the Wollaston prism is a polarised beam whose azimuth extends at an angle of approximately 45° to the optix axes of the Wollaston prism, in that a $\lambda/4$ plate wherein $\lambda$ is the wavelength of the radiation beam is arranged in the radiation path between the Wollaston prism and the radiation-sensitive detection system, the optic axis of said plate extending at an angle of 45° to the directions of polarisation of the sub-beams, and in that a polarisation analyser is arranged between the $\lambda/4$ plate and the detection system.

It is remarked that, in the field of optically measuring surface parameters, like roughness, flatness and radius of curvature, it is generally known, for example from EP-A 0 011 708, to use two mutually perpendicularly polarized beams and to determine the phase difference of the beams after having been reflected by the surface. It is however not known to use two measuring beams for detecting centring-errors. Moreover, the means used in the device of EP-A 0 011 708 for forming the two beams is not a Wollaston prism and it is the phase difference itself between a measuring beam and a reflecting beam that is measured in the latter device and not the variation of such phase difference between two measuring beams as in the device according to the present invention.

The beam b incident on the Wollaston prism may have an arbitrary ellipticity, that is to say, the ellipse described by the E-vector of the electromagnetic radiation may be wide, but it may be alternatively narrow. The azimuth of the polarisation is the longitudinal direction of this ellipse. In the case of a linearly polarised radiation the ellipse has merged into a line in the direction of the azimuth. For the beam b it is only required that the azimuth extends at an angle of approximately 45° to the optic axes of the Wollaston prism.

The Wollaston prism splits the incident radiation beam into two linearly polarised sub-beams having mutually perpendicular directions of polarisation, which beams extend at a small angle to each other. The portions of the sub-beams reflected by the surface to be centred are combined by the Wollaston prism to one beam again having two components which are mutually polarised perpendicularly and have a phase difference which is determined by the centring error of the surface. The $\lambda/4$ plate converts the first and the second beam components into left-hand and right-hand, respectively, circularly polarised beam components. As is known, two coincident beams which are left-hand and right-hand circularly polarised respectively constitute one linearly polarised beam whose azimuth of polarisation, also referred to as direction of polarisation in the case of a linearly polarised beam, is determined by the phase difference between the composite beams.

The use of the Wollaston prism and the suitable choice of the direction of polarisation of the beam incident on this prism results in a minimum radiation loss. In addition it has been ensured that the paths of the sub-beams coincide as much as possible; these paths are only different between the Wollaston prism and the surface to be centred. Besides, the Wollaston prism, is not very sensitive to vibrations.

The direction of polarisation of the beam emerging from the $\lambda/4$ plate can be detected by means of an analyser arranged stationary between this plate and the detection system and whose optical axis is, for example, perpendicular to the direction of polarisation of the beam emerging from the $\lambda/4$ plate if the phase difference between the said sub-beams is zero. If the signal of the detection system, whioh may be a single photodiode, remains zero upon rotation of the surface to be centred, this surface will then be centred correctly.

However, the device according to the invention is preferably further characterized in that a rotating polarisation analyser is arranged between the $\lambda/4$ plate and the radiation-sensitive detection system and in that a position detection system for the analyser is provided.

The signals of the radiation-sensitive detection system and of the position detection system can be visualised by an operator on, for example, an oscilloscope. This operator can readjust the surface in such a manner that the signal of the radiation-sensitive detection system is stable. The surface is then centred correctly.

The device according to the invention may further be characterized in that the electrical outputs of the position detection system and of the radiation-sensitive detection system are connected to the inputs of a phase comparison circuit whose output signal represents the centring error.

The position detection system for the rotating analyser is preferably in the form of an auxiliary radiation source and a polariser which are arranged on one side of the analyser, and a radiation sensitive detector which is arranged on the other side of the analyser.

The device according to the invention is further characterized in that an active electro-optical or magneto-optical crystal for rotating the direction of polarisation of the beam emerging from the $\lambda/4$ plate is arranged between the polarisation analyser and the $\lambda/4$ plate.

A phase comparison circuit may be provided for comparing the phase of the output signal of the radiation-sensitive detection system and the phase of the control signal for the active crystal. This makes it possible to automate the centration of the object, for example, a lens. It is then also possible to determine at which rotational angle of the surface with respect to the rotational axis for this surface the phase difference between the sub-beams is maximum. Then not only the magnitude but also the direction of the centring error is known so that it is also known in which direction the centre of curvature must be moved.

Small centring errors can be measured very accurately with the embodiments of the device described. The measuring range of these embodiments is, however, relatively small so that for optimum use a given precentration must have taken place. The coarser centring error detection required for this pre-centration may be realized with the device according to the invention if it is further characterized in that the radiation source supplies a linearly polarised beam whose azimuth is parallel to one of the optic axes of the Wollaston prism, in that an n./$\lambda$ plate wherein $1/4 \leq n \leq 3/4$ is arranged between the radiation source and the Wollaston prism, which plate can be switched between two positions so that the azimuth of the beam emerging from this plate is switched between $0°$ and $45°$ with respect to the optic axes of the Wollaston prism and in that the radiation-sensitive detection system is adapted to supply four electrical signals from which both a coarse and a fine centring error signal can be derived.

The radiation sensitive detection system may consist of a four-quadrant detector or of a two-dimensional position-sensitive photodiode. For obtaining a coarse centring error signal the n. $\lambda$ plate is set to the first position, to be referred to as the zero position. Then the radiation beam is not split so that only one beam is incident on the surface to be centred. The four output signals of the radiation sensitive detection system are then processed to a first and a second signal which give an indication about the movement of the radiation spot formed on the detection system in two mutually perpendicular directions. When it is found that the centring error is smaller than a given value, the n. $\lambda$ plate is set to the second position. Then two beams are incident on the surface to be centred so that the above-described phase measurement can be performed. The four detector signals are then added together.

A device comprising a radiation-sensitive detection system supplying four output signals may be further characterized in that in the radiation path before this detection system a first extra mirror which is pivotable about a first axis is arranged, as well as a second extra mirror which is pivotable about a second axis perpendicular to the first axis, the radiation spot formed on the radiation sensitive detection system being movable with the aid of these mirrors in two mutually perpendicular directions in the plane of the detection system, in that the four detector signals are processed to control signals with which the mirrors are adjusted in such a way that the centre of the radiation spot coincides with the centre of the detection system the positions of the mirrors representing the centring error.

If a four-quadrant detector is used, pre-alignment of the radiation spot on this detector is no longer necessary in this detection method. This detection method may also be used with a two-dimensional position-sensitive photodiode.

The assembly of a multiple lens system may be considerably speeded up if the centration of the second surface of a lens element is no longer performed after the centration of the first surface of this lens element but can take place simultaneous therewith. This is possible with a device according to the invention which is characterized in that it also comprises a second beam splitter for forming a third and a fourth sub-beam, and a lens system arranged between this beam splitter and the object for directing the third and fourth sub-beams at angles of approximately $90°$ onto the second surface, and a second radiation-sensitive detection system associated with the third and fourth sub-beams for supplying a centring error signal for the second surface.

This device is preferably further characterized in that a beam inverter element is arranged in the path of one of the third and fourth sub-beams reflected by the second surface. This prevents aberrations caused by the first surface of the object in the third and fourth sub-beams from affecting the centring error signal for the second surface.

The invention will now be described in greater detail with reference to the accompanying drawings in which

Figure 1 shows diagrammatically an embodiment of the device according to the invention with which both a fine centring error and a coarse centring error can be detected.

Figure 2 shows a beam splitter for use in this device,

Figure 3 shows the principle of the invention,

Figure 4 shows the detector signal obtained in the device of Figure 1 and the associated reference signal,

Figures 5 and 6 show parts of two embodiments of the device in which a magneto-optical and an electro-optical cell are used, respectively,

Figures 7 and 8 show a first and a second embodiment of a composite detector and the associated signal processing circuit,

Figures 9 and 10 show alternative methods of detecting a centring error with one radiation beam, and

Figure 11 shows a device according to the invention for simultaneous detection of the centring errors of two surfaces.

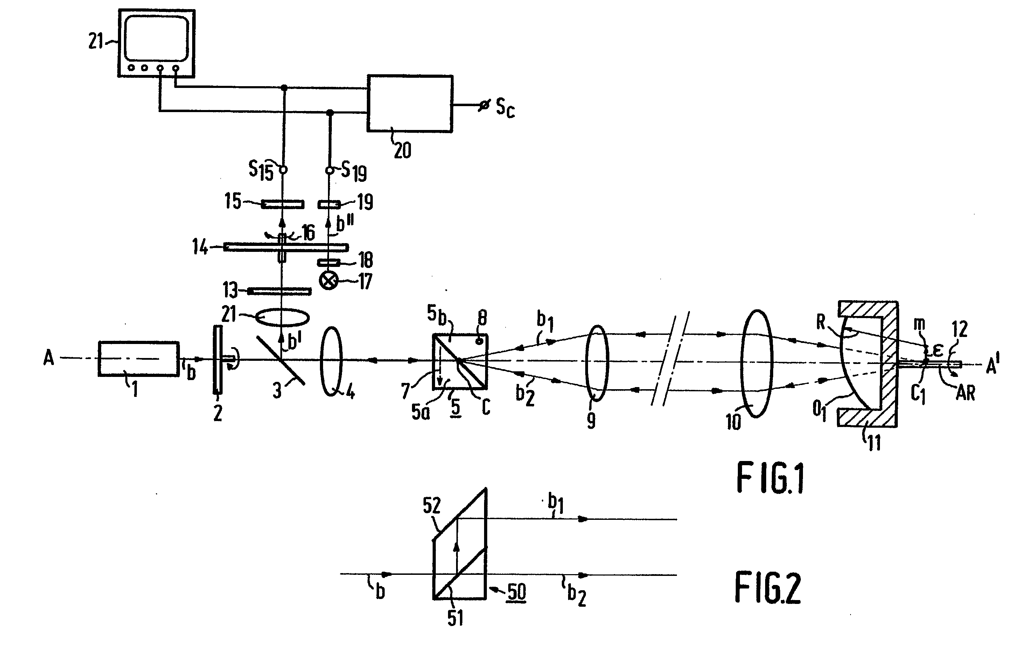

In Figure 1 the surface which is to be centred, for example, a lens surface or a mirror surface is denoted by $O_1$. This surface has a radius of curvature R and a centre of curvature m. The surface $O_1$ is provided in a holder 11 which is rotatable about an axis AR as is denoted by the arrow 12. The rotational or reference axis AR may coincide with the optical axis AA' of the centring detection device. However, the axes AR and AA' may also extend at angles to each other or they may cross each other.

This device comprises, for example, a coherent radiation source 1, for example a laser, which emits a beam b, a beam splitter 5 which splits the beam b into two sub-beams $b_1$ and $b_2$ and a lens system 9, 10. This lens system, which in principle may consist of a single lens, directs the sub-beams at angles of preferably $90°$ onto the surface $O_1$. The sub-beams which are directed towards the point $C_1$ in the vicinity of the centre of curvature $m_1$ are partly reflected

by the surface $O_1$. The reflected sub-beams traverse substantially the same path as the forward sub-beams and are united to one beam by the beam splitter 5. This beam b' is reflected by a beam divider 3, for example, a semi-transparent mirror or a semi-transparent prism to a radiation-sensitive detection system 15 which in principle may consist of one detector, for example a photodiode.

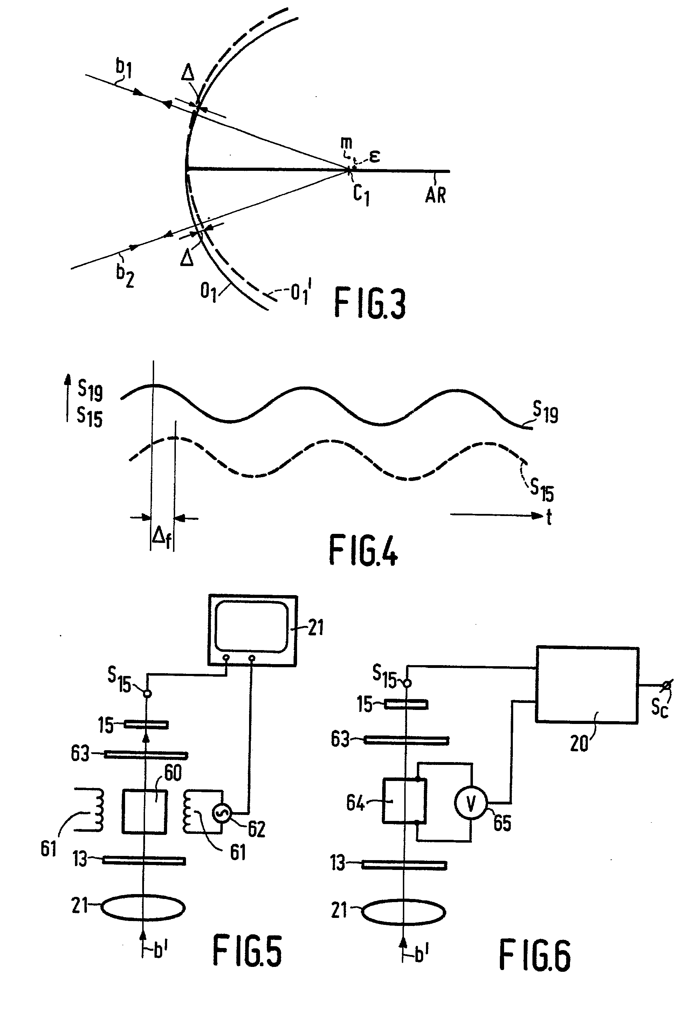

If the centre of curvature m of the rotationally symmetrical surface $O_1$ is located on the rotational axis, the sub beams $b_1$ and $b_2$ are symmetrically incident on this surface. This situation is shown in Figure 3 by the solid-line curve $O_1$ for the surface to be centred. Then the sub-beams $b_1$ and $b_2$ traverse the same optical path lengths on their forward and return paths. However, if the centre m of the surface to be centred is moved over a distance $\varepsilon$ with respect to the rotational axis and if the surface $O_1'$ assumes the position which is denoted by the broken - line curve in Figure 3, the length which the beam $b_2$ has traversed on its forward and return paths has increased by an amount of 2 $\Delta$ at a given moment, and the length of the path of the beam $b_1$ has decreased by an amount of 2 $\Delta$ so that the path length difference for the beams $b_1$ and $b_2$ is 4 $\Delta$ . Then there is a phase difference between the sub-beams of $\phi = 8. \pi \Delta / \lambda$ wherein $\lambda$ is the wave length of the radiation used. This phase difference which is a measure of the centring error of the surface $O_1$ can be measured very accurately, as will be described hereinafter with reference to an embodiment in which mutually perpendicularly polarised sub beams are used.

In this way not only the deviation between the centre of curvature of a sperical surface and the rotational axis but also that between the optical axis of an aspherical surface, which is rotationally symmetrical, and the rotational axis can be determined. In the case of a spherical surface the optical axis is the accumulation of the separate centres of curvature of the rotationally symmetrical sectors of the rotational surface.

Beam splitting may be realized with the aid of a semi-transparent mirror 51 in the path of the beam b which passes half this beam as sub beam $b_2$ and reflects the rest as sub-beam $b_1$ to a completely reflective mirror 52. This mirror ensures that the sub-beam $b_1$ will be parallel to the sub-beam $b_2$. The two mirrors may be arranged in one block 50 of, for example, glass so that the mirrors 51 and 52 are always aligned correctly with respect to each other. However, it must be ensured that the block 50 is not pivotable. If non-coherent radiation is used for the beam b, it must be ensured that the path lengths of the sub-beams $b_1$ and $b_2$ are equal.

It is to be noted that the block 50 with the mirrors 51 and 52 is intended as an alternative to the prism 5 and the lens 9 of Figure 1.

The beam b can alternatively be split into sub-beams $b_1$ and $b_2$ by means of a diffraction grating. Such a grating may have such a form that the greater part of the radiation are diffracted in the +1st order and in the -1st order, whilst the higher order diffracted sub beams are deflected beyond the entrance pupil of the lens system 9, 10. The zero order sub beam may be suppressed in a simple manner, for example, by means of an absorbing plate.

When using a grating for beam splitting, there is loss of radiation. This is prevented in the preferred embodiment of the device shown in Figure 1 in which polarising means are used for beam splitting and beam combination. In this Figure element 5 is a Wollaston prism. This prism consists of, for example two sub prisms $5_a$ and $5_b$ of birefringent material whose principal axes or optic axes 7 and 8 are at right angles to each other. It has been ensured that the beam b incident on the prism 5 is an arbitrary polarised beam whose azimuth extends at an angle of approximately 45° to the optic axes 7 and 8. The Wollaston prism splits the beam into two sub-beams having mutually perpendicular directions of polarisation, which beams extend at a small angle to each other. The beams are deflected, for example, symmetrically at small opposite angles with respect to the axis AA'. The reflected sub-beams are united to one beam b' when they pass through the Wollaston prism. This beam has two components with mutually perpendicular directions of polarisation, which components have a mutual phase difference which varies during rotation of the surface $O_1$. The magnitude of this variation is determined by the extent of the centring error of the surface $O_1$.

Instead of two sub-prisms, the Wollaston prism may comprise three sub-prisms in which the optic axes of the two outer sub-prims have the same direction and the optic axis of the inner sub-prism is at right angles to those of the two outer ones. Such a Wollaston prism is symmetrical and diffracts the sub-beams at larger angles than a Wollastcn prism comprising two sub-prisms.

Between the beam divider 3 and the detector 15 a $\lambda$ /4 plate 13 is arranged in a diagonal position, that is to say, the optic axis of this plate extends at an angle of 45° to the directions of polarisation of the beam components. This plate converts the two linearly polarised beam components into two oppositely circularly polarised beam components which, since they coincide, constitute one linearly polarised beam. The direction of polarisation of this beam is determined by the phase difference between the composite beam components, which phase difference varies in the case of a decentred and rotating surface $O_1$.

The direction of polarisation of the single beam b' can be determined with the aid of a polarisation analyser 14 which is placed in front of the detector 15 and is oriented, for example, in such a way that its transmission direction of polarisation is at right angles to the direction of polarisation of the beam b' when the surface $O_1$ is centred correctly. In the case of correct centring the detector 15 will then receive no radiation and its output signal is zero. As the centring error becomes larger the detector signal will become larger.

This detector signal can be supplied via a control amplifier not shown to a displacement device, likewise not shown, engaging the holder 11 for the surface $O_1$.

The device can be improved by replacing the stationary analyser by a rotating analyser which is denoted by the arrow 16 in Figure 1. The detector 15 then supplies a periodical sinusoidal signal whose phase is determined by the direction of polarisation of the beam b'. To determine this phase, the device also comprises a position detection system for the analyser. This system comprises an auxiliary radiation source 17, a polariser 18 which passes a linearly polarised beam b" of the radiation emitted by the source 17 and an auxiliary detector 19, preferably a photodiode. The beam b" may be alternatively derived from the main radiation source 1. When the analyser 14 rotates, the detector 19 supplies a periodical sinusoidal signal which is denoted by $S_{19}$ in Figure 4. This Figure also shows the signal $S_{15}$ of the detector 15. The signals $S_{15}$ and $S_{19}$ can be applied to a phase comparison circuit 20 whose output signal $S_c$ is determined by the phase difference $\Delta f$ between the signals $S_{15}$ and $S_{19}$, hence by the direction of polarisation of the beam b' and consequently by the centring error $\varepsilon$.

The signals $S_{15}$ and $S_{19}$ can also be applied to an oscilloscope 21 so that the signal $S_{15}$ can be observed by an operator of the device. The operator can then move the holder 11 of the surface $0_1$ via a manipulator in such a way that the signal $S_{15}$ no longer "runs" when the surface $0_1$ rotates, or in other words, when the phase of $S_{15}$ is constant.

The phase measurement described is very accurate: a rotation of the direction of polarisation through 12° can still be detected correctly. This angle corresponds to a path length difference of 4. $\Delta = \lambda /30$. For a wavelength $\lambda = 633$ nm a path length difference of $\Delta = 5$ nm can still be detected correctly in principle, which in a specific embodiment of the device may correspond to $\varepsilon = 50$ nm. Since the device is dynamic, that is to say, the detector signals are alternating signals, relatively slow variations in the device affecting the intensity of the beams do not have any influence on the centring error signal obtained.

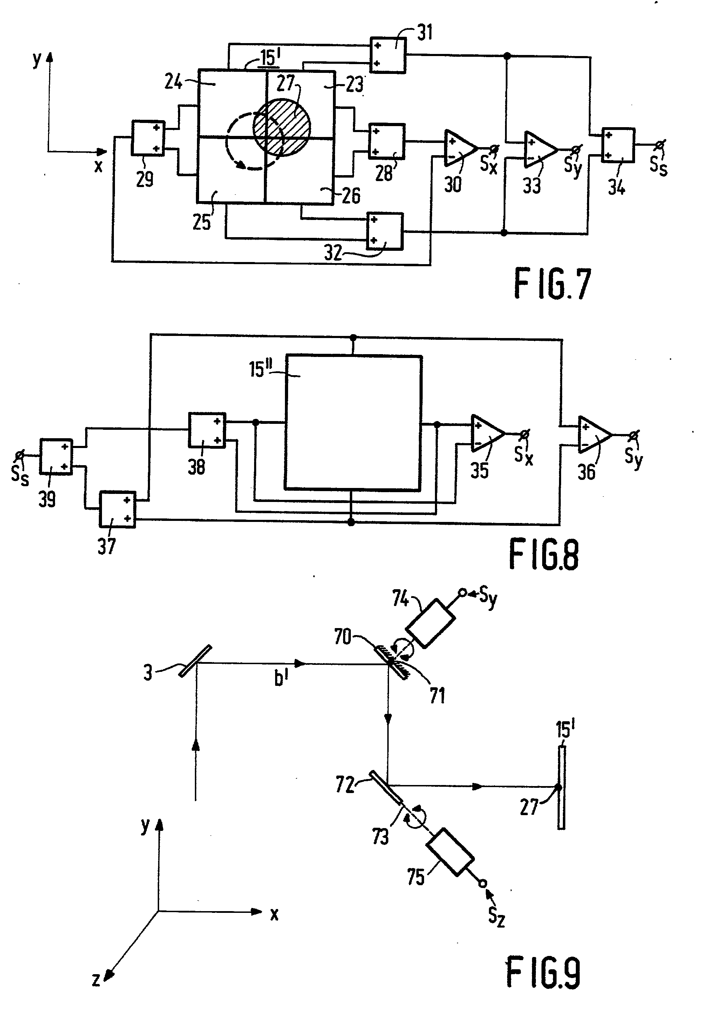

The device may also be rendered dynamic by replacing the analyser 14 by a combination of a Faraday rotator 60 and a stationary analyser 63 as is shown in Figure 5. In a Faraday rotator the direction of polarisation of a linearly polarised beam traversing it is rotated by means of a magnetic field applied around the rotator and generated by a magnetic coil 61 which is energized by a current source 62. A dynamic centring error signal may also be obtained by means of an electro-optical cell 64 such as a Pockels-effect cell, or a Kerr-effect cell on the position of the Faraday rotator as is shown in Figure 6. Such an electro-optical cell changes the direction of polarisation of a linearly polarised beam traversing it under the influence of an electric field applied across the cell and supplied by a voltage source 65.

When using an electro-optical or a magneto-optical cell, the phase of the output signal $S_{15}$ of the radiation-sensitive detection system can be compared with the phase of the control signal for the cell in a phase comparison circuit 20. It is also possible to apply the two signals to an oscilloscope 21.

The two mutually perpendicularly polarised sub-beams $b_1$ and $b_2$ which extend at a small angle to each other may alternatively be obtained by exposing the Wollaston prism with a beam originating from a so-called Zeeman laser. A laser of this type, which is described in Philips' Technical Review", Vol. 30, 1969, No. 6. 7, pages 160-6, supplies a beam which consists of two oppositely circularly polarised beam components having a frequency difference. With the aid of a $\lambda /4$ plate in front of the Wollaston prism 5 these beam components are converted into two linearly polarised components having mutually perpendicular directions of polarisation and the Wollaston prism gives these components different directions again. The beams reflected and united by the Wollaston prism may traverse the $\lambda /4$ plate 13 and a stationary analyser 14 on their path to the detector 15. A part of the beam supplied by the Zeeman laser may be split off, which part then serves as a reference signal in the phase detection.

As has already been noted, a single lens could be used for directing the sub-beams $b_1$ and $b_2$ at right angles to the surface $0_1$ and to the point $C_1$ on the rotational axis. However, two lenses are preferably used for this purpose, as is shown in Figure 1. The first lens has such a power and is arranged in such a position that its object focus coincides with the centre C of the prism 5. The power of the second lens 10 is such that its image focus coincides with the point $C_1$. The beams between the two lenses are parallel so that the lens 10 can be moved in dependence upon the axial position of the surface $0_1$.

The device may comprise a further lens 4. This lens ensures that the beam reflected towards the detector 15 has the same width as the beam emitted by the source 1. A lens 21 which focusses the beam b' on the detector may be arranged between the beam splitter 3 and the detector 15.

The radiation source 1 of Figure 1 may emit a linearly polarised beam and may be rotated in such a way that the direction of polarisation of this beam extends at an angle of 45° to the optic axes of the Wollaston prism 5. However, the linearly polarised beam b emitted by the source 1 preferably has a direction of polarisation which is parallel to one of the optic axes of the Wollaston prism and an adjustable $\lambda /2$ plate is arranged between the source and the beam splitter 3. When this plate is rotated in such a way that its optic axis extends at an angle of 22.5° to the direction of polarisation of the beam b, the beam emerging from the plate 2 has a direction of polarisation which extends at an angle of 45° to the optic axes of the Wollaston prism so that two sub-beams are formed by this prism and a fine centring error signal can be obtained.

If the $\lambda /2$ plate is set to its zero position, that is to say, if its optic axis is parallel to that of the beam b, the beam emerging from this plate has a direction of polarisation which is parallel to one of the optic axes of the Wollaston prism. Only one radiation beam now emerges from this prism and the device can now be used for coarse centring of the surface $0_1$. To this end the polarisation analyser 14 is fixed. The detector 15 must then consist of a composite detector in the form of a four-quadrant detector or a two-dimensional position-sensitive photocell. The movement of the radiation spot formed by the single beam on the detector in two mutually perpendicular directions and hence the centring error of the surface $0_1$ reflecting this beam towards the detector can then be determined with such a composite detector.

In Figure 7 the reference numeral 15' denotes a four-quadrant detector consisting of four detectors 23, 24, 25 and 26. If the output signals of these detectors are represented by $S_{23}$, $S_{24}$, $S_{25}$ and $S_{26}$, the movement of the radiation spot 27 in the first direction, the X direction, is given by:

$S_X = (S_{23} + S_{26}) - (S_{24} + S_{25})$

The movement of the radiation spot 27 in the second direction, the Y-direction, is given by:

$S_Y = (S_{23} + S_{24}) - (S_{25}25 + S_{26})$ The signals $S_X$ and $S_Y$ can be obtained in a simple manner with the aid of four summing circuits 28, 29, 31 and 32 and two subtractor circuits 30 and 33. The signals $S_X$ and $S_Y$ may be visualised as X and Y signals on an oscilloscope and the operator can adjust the holder 11 in such a way that the signals remain stable during the rotation of the surface $0_1$.

Subsequently the device can be rendered suitable for fine centring. To this end the $\lambda/2$ plate 2 is set to the position 22.5°, the analyser is rotated and the signals of the detectors are added together with the aid of the summing circuits 31, 32 and 34 so that these detectors effectively constitute one detector.

As an alternative to the four-quadrant detector, Figure 8 shows a two-dimensional position-sensitive photocell and an associated electronic circuit for deriving the signals $S_X$, $S_Y$ and $S_S$. The circuit comprising two subtractor circuits 35 and 36 and three summing circuits 37, 38 and 39 needs no further explanation after the description of Figure 4.

The $\lambda/2$ plate 2 can be replaced by an arbitrary n. $\lambda$ plate in which $1/4 \leq n \leq 3/4$ whilst the angle through which the plate must be rotated is adapted to n.

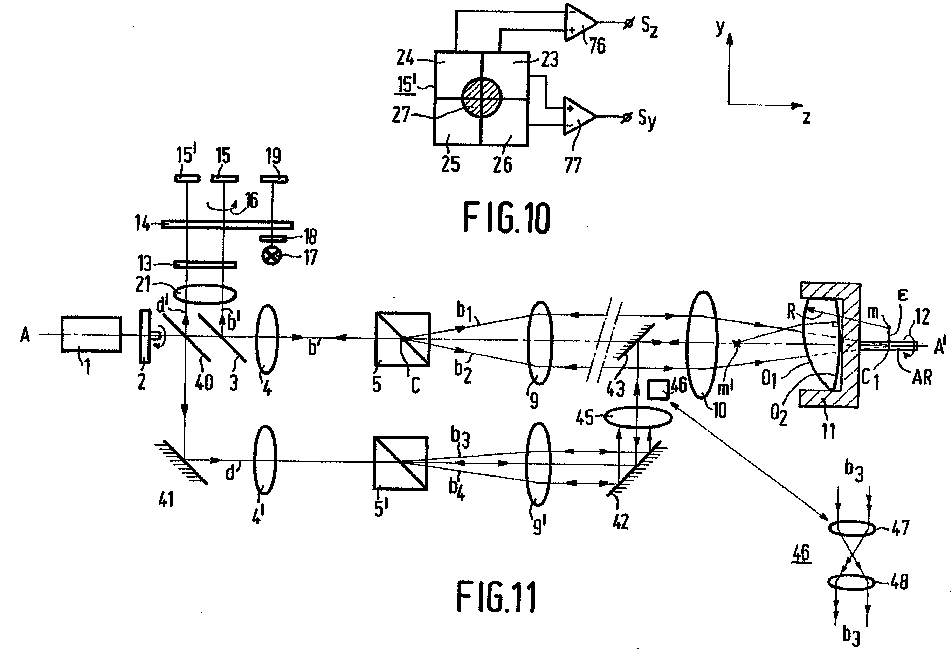

Figure 9 illustrates a different method of detecting a centring error with the aid of one radiation beam, which method can be combined with the phase measuring method according to the invention. In this Figure reference symbol b' is the beam originating from the surface to be centred, and reflected by the beam splitter 3. On its path to the radiation-sensitive detection system in the form of a four-quadrant detector 15', the beam successively encounters a first extra mirror 70 and a second extra mirror 72. The first mirror is pivotable about an axis 71 in the Z-direction of the XYZ system of coordinates shown in Figure 9. The plane of the detector 15' is parallel to the YZ-plane. Pivoting of the mirror 70 about the axis 71 causes the radiation spot 27 to move in the Y direction. The second mirror 72 is pivotable about an axis 73 which is in the XY plane. Pivoting this mirror about the axis 73 results in a movement of the radiation spot in the Z direction.

Figure 10 shows the four-quadrant detector in a front elevational view. The difference signal $S_Z$ of the detectors 23 and 24 obtained with a differential amplifier 76 indicates the position of the radiation spot 27 in the Z direction. The difference signal $S_Y$ of the detectors 23 and 26 obtained with a differential amplifier 77 indicates the position of the radiation spot 27 in the Y direction. The signals $S_Y$ and $S_Z$ may be fed back to the drive means 74 and 75 for the mirrors 70 and 72 so that these mirrors can be pivoted in such a way that the radiation spot 27 is positioned in the centre of the four-quadrant detector. The positions of these mirrors are then determined by the centring error of the surface $0_1$. This centring error can be found by determining the positions of the mirrors 70 and 72 with the aid of known position detecting means or by measuring the value of the control signals for the mirrors if the signals $S_Y$ and $S_Z$ are zero. In this so-called zero method the four-quadrant detector need not be pre-aligned with respect to the beam. The detection method shown in Figures 9 and 10 may also be used with a two-dimensional position-sensitive photodiode.

For centring a lens with two refractive surfaces the centring error must be determined for each of these surfaces. When using the device described so far the centring error of a first surface must first be detected and subsequently that of the second surface must be detected. According to the invention the device may be extended in such a manner that the centring errors of the two surfaces can be detected simultaneously.

An embodiment of such a device is shown in Figure 11. This device comprises a second beam splitter 5', for example again a Wollaston prism. The beam d incident on this beam splitter may originate from the radiation source1 via a beam divider 40. A reflector 41, for example, a mirror reflects the beam d to the Wollaston prism 5' and the beam emerging from the prism 5' is reflected via further reflectors 42 and 43 in the path of beam b. The lenses 4' and 9' have the same function for this beam as have the lenses 4 and 9 for the beam b. The lens 10 is arranged in the common path of the two beams b and d. The beam reflected by the surface $0_2$ traverses the same path as the beam d and is passed by the beam divider 40 to a second radiation-sensitive detection system 15'.

In order that the sub-beams $b_3$ and $b_4$ formed by the second beam splitter 5' are perpendicularly or substantially perpendicularly incident on the second surface $0_2$ after traversing the first surface $0_1$, for example an extra lens 45 may be arranged in the path of these sub-beams. It is alternatively possible to adapt the lens 10. This lens may be divided, for example into zones which are only traversed by the sub-beams $b_1$ and $b_2$ and into zones which are only traversed by the sub-beams $b_3$ and $b_4$, which different zones have a different power. For the purpose of surveyability Figure 11 shows only parts of the radiation paths for sub-beams $b_3$ and $b_4$. The sub-beams $b_3$ and $b_4$ may be located beyond the mirror 43 in the same plane as the sub-beams $b_1$ and $b_2$, whilst the distance between the sub-beams $b_3$ and $b_4$ is then, for example shorter than that between the sub-beams $b_1$ and $b_2$. It is also possible for the sub-beams $b_3$ and $b_4$ to be located in a plane which is different from that of the sub-beams $b_1$ and $b_2$; for example one of the sub-beams $b_3$, $b_4$ is locat-

ed in front of the plane of the drawing and the other is located behind this plane.

The sub-beams $b_3$ and $b_4$ reflected by the surface $O_2$ have a phase difference which upon rotation of this surface about the axis AR varies in accordance with the centring error of this surface with respect to the rotational axis AR. This phase difference can be analogously detected as the phase difference between the sub-beams $b_1$ and $b_2$. The elements in the radiation path behind the beam dividers 3 and 40, hence the elements 21, 13 and 14 in Figure 11 are then preferably used for the two beams b' and d'.

In Figure 11 the reference symbol m' is the centre of curvature of the surface $O_2$, if this surface is centred correctly. The centre m' is the point of intersection with the rotational axis AR of a ray which is perpendicular to the surface $O_2$ and which is refracted by the first surface $O_1$. The refractive surface $O_1$ introduces aberrations in the sub-beams $b_3$ and $b_4$ reflected by the surface $O_2$, which aberrations are opposed for the two sub-beams. These aberrations may cause interference stripes in the composite beam d' directed towards the detector 15'. To prevent this, a beam inverter element 46 may be arranged in one of the reflected sub-beams $b_3$, $b_4$. Such an element may be, for example a Dove prism, a Pêchan prism or a combination of two lenses 47 and 48, as is shown in the right-hand lower part of Figure 11. The inverter element 46 ensures that the aberrations caused by the surface $O_1$ in the reflected sub-beams $b_3$ and $b_4$ are equal so that they cannot cause interference stripes in the composite beam d'.

## Claims

1. A device for detecting a centring error of a rotationally symmetrical surface of an object, which device comprises a radiation source (1) for exposing a small portion of the surface ($O_1$), a rotatable holder (11) for the object at a radiation-sensitive detection system (15) arranged in the path of a beam (b') originating from the surface and supplying a signal ($S_{15}$) which is a measure of the centring error ($\varepsilon$) with respect to the rotational axis (AR) of the holder, characterized in that a beam splitter (5; 50) for splitting the radiation beam (b) into two measuring sub-beams ($b_1$, $b_2$) and for combining the two sub-beams after they have been reflected by the surface ($O_1$) is arranged in the radiation path between the radiation source (1) and the surface ($O_1$) to be centred, in that a lens system (9, 10) directing the sub-beams at angles of approximately 90° onto the surface ($O_1$) is arranged between the beam splitter and the surface and in that the output signal ($S_{15}$) supplied by the radiation-sensitive detection system (15), upon occurrence of a centring error ($\varepsilon$), shows a variation, synchronously with the object rotation, which output signal variation represents a variation in phase difference, caused by a centring error, between the two sub-beams.

2. A device as claimed in Claim 1, characterized in that the beam splitter (50) comprises a semi-transparent polarisation-sensitive or insensitive mirror (51) in the beam and at least one fully reflecting mirror (52) in the path of at lest one of the sub-beams ($b_1$).

3. A device as claimed in Claim 1, characterized in that the beam-splitting element is a Wollaston prism (5), in that the beam originating from the source and entering the Wollaston prism is a linearly polarised beam whose azimuth extends at an angle of approximately 45, to the optic axes (7, 8) of the Wollaston prism, in that a $\lambda/4$ plate (13), wherein $\lambda$ is the wavelength of the radiation beam, is arranged in the radiation path between the Wollaston prism (5) and the radiation-sensitive detection system (15), the optic axis of said plate extending at an angle of 45° to the directions of polarisation of the sub-beams ($b_1$, $b_2$), and in that a polarisation analyser (14) is arranged between the $\lambda/4$ plate (13) and the detection system (15).

4. A device as claimed in Claim 1, characterized in that the beam-splitting element is a Wollaston prism (5), in that the radiation source is a Zeeman laser, in that a $\lambda/4$ plate wherein $\lambda$ is the wavelength of the radiation is arranged between this laser and the Wollaston prism (5), in that a $\lambda/4$ plate (13) is arranged between the Wollaston prism and the radiation-sensitive detection system (15), the optic axis of said plate (13) extending at an angle of 45° to the directions of polarisation of the sub-beams ($b_1$, $b_2$), and in that a polarisation analyser (14), is arranged between the $\lambda$/plate (13) and the detection system (15).

5. A device as claimed in Claim 3, characterized in that the polarisation analyser (14) is stationary.

6. A device as claimed in Claim 3, characterized in that the polarisation analyser (14) is rotatable and in that a position detection system (17, 18, 19) for the analyser is provided.

7. A device as claimed in Claim 6, characterized in that the electrical outputs of the position detection system (17, 18. 19) and of the radiation-sensitive detection system (15) are connected to the inputs of a phase comparison circuit (20) whose output signal (Sc) represents the centring error.

8. A device as claimed in Claim 6 or 7, characterized in that the position detection system comprises an auxiliary radiation source (17) and a polariser (18) which are arranged on one side of the analyser (14), and a radiation-sensitive detector (19) which is arranged on the other side of the analyser.

9. A device as claimed in Claim 5, characterized in that an active electro-optical (64) or magneto-optical crystal (60) for rotating the direction of polarisation of the beam (b') emerging from the $\lambda/4$ plate (13) is arranged between the polarisation analyzer (63) and the $\lambda/4$ plate (13).

10. A device as claimed in Claim 9, characterized in that a phase comparison circuit (20) is provided for comparing the phase of the output signal ($S_{15}$) of the radiation-sensitive detection system (15) and the phase of the control signal (62, 65) for the active crystal.

11. A device as claimed in any one of Claims 3 and 4 to 10, characterized in that the radiation source (1) supplies a linearly polarised beam whose azimuth is parallel to one of the optic axes (7, 8) of the Wollaston prism (5), in than an n • λ plate (2) wherein 1/4 ≤ n ≤ 3/4 is arranged between the radiation source and the Wollaston prism, which plate can be switched between two positions so that the azimuth of the beam emerging from this plate is switched between 0° and 45° with respect to the optic axes of the Wollaston prism and in that the radiation-sensitive detection system (23, 24, 25, 26; 15″) is adapted to supply four electrical signals from which both a coarse $(S_x, S_y)$ and a fine centring error signal $(S_s)$ can be derived.

12. A device as claimed in any one of the preceding Claims, comprising a radiation-sensitive detection system (23, 24, 25, 26) supplying four output signals, characterized in that in the radiation path, before this detection system a first extra mirror (70) which is pivotable about a first axis (71) is arranged as well as second extra mirror (72) which is pivotable about a second axis (73) perpendicular to the first axis (71), the radiation spot (27) formed on the radiation-sensitive detection system being movable with the aid of said mirrors in two mutually perpendicular directions in the plane of the detection system, in that the four detector signals are processed to control signals $(S_y, S_z)$ with which the mirrors (70, 72) are adjusted in such way that the centre of the radiation spot (27) coincides with the centre of the detection system (23, 24, 25, 26), the positions of the mirrors representing the centring error.

13. A device as claimed in any one of the preceding Claims for simultaneously detecting the centring errors of two surfaces $(0_1, 0_2)$ of an object, characterized in that the device also comprises a second beam splitter (5′) for forming a third and a fourth sub-beam (63, 64), and a lens system (9, 10) arranged between this beam splitter (5′) and the object for directing the third and fourth sub-beams $(b_3, b_4)$ at angles of approximately 90° onto the second surface $(0_2)$, and a second radiation-sensitive detection system (15′) associated with the third and fourth sub-beams for supplying a centring error for the second surface $(0_2)$.

14. A device as claimed in Claim 13, characterized in that a beam inverter element (46) is arranged in the path of one of the third and fourth sub-beams $(b_3, b_4)$ reflected by the second surface $(0_2)$.

## Patentansprüche

1. Vorrichtung zum Detektieren eines Zentrierfehlers einer rotationssymmetrischen Fläche eines Objekts, welche Vorrichtung enthält eine Strahlungsquelle (1) zum Anstrahlen eines kleinen Teils der Fläche $(0_1)$, ein drehbarer Objekthalter (11) und ein strahlungsempfindliches Detektorsystem (15) im Weg eines Bündels (b′) aus der Fläche und zum Ausgeben eines Signals $(S_{15})$, das maßgebend ist für den Zentrierfehler (E) in bezug auf die Rotationsachse (AR) des Halters, dadurch gekennzeichnet, daß ein Bündelaufspalter (5; 50) zum Aufspalten des Strahlungsbündels (b) in zwei Meß-Teilbündel $(b_1, b_2)$ und zum Kombinieren der beiden Teilbündel nach ihrer Reflexion an der Fläche $(0_1)$ im Strahlungsweg zwischen der Strahlungsquelle (1) und der zu zentrierenden Fläche $(0_1)$ angeordnet ist, daß ein Linsensystem (9, 10) zum Richten der Teilbündel unter Winkeln von etwa 90° auf die Fläche $(0_1)$ zwischen dem Bündelaufspalter und der Fläche angeordnet ist, und daß das Ausgangssignal $(S_{15})$ aus dem strahlungsempfindlichen Detektorsystem (15) bei Auftreten eines Zentrierfehlers (E) eine der Objektdrehung synchron verlaufende Variation zeigt, wobei diese Variation im Ausgangssignal eine von einem Zentrierfehler ausgelöste Variation des Phasenunterschieds zwischen den beiden Teilbündel darstellt.

2. Vorrichtung nach Anspruch 1, dadurch gekennzeichnet, daß der Bündelaufspalter (50) einen halbtransparenten, polarisationsempfindlichen oder unempfindlichen Spiegel (51) im Bündel und wenigstens einen ganz reflektierenden Spiegel (52) im Weg wenigstens eines der Teilbündel $(b_1)$ enthält.

3. Vorrichtung nach Anspruch 1, dadurch gekennzeichnet, daß das Bündelaufspaltelement ein Wollastonprisma (5) ist, daß das von der Quelle gelieferte und in das Wollastonprisma eintretende Bündel ein linear polarisiertes Bündel ist, dessen Azimut sich unter einem Winkel von etwa 45° gegen die optischen Achsen (7, 8) des Wollastonprismas erstreckt, daß eine λ/4-Platte (13), bei der λ die Wellenlänge des Strahlungsbündels ist, im Strahlungsweg zwischen dem Wollastonprisma (5) und dem strahlungsempfindlichen Detektorsystem (15) angeordnet ist, die optische Achse dieser Platte sich unter einem Winkel von 45° mit den Polarisationsrichtungen der Teilbündel $(b_1, b_2)$ erstreckt, und daß ein Polarisationsanalysator (4) zwischen der λ/4-Platte (13) und dem Detektorsystem (15) angeordnet ist.

4. Vorrichtung nach Anspruch 1, dadurch gekennzeichnet, daß das Bündelaufspaltelement ein Wollastonprisma (5) ist, daß die Strahlungsquelle ein Zeeman-Laser ist, daß eine λ/4-Platte, bei der λ die Wellenlänge des Strahlungsbündels ist, zwischen diesem Laser und dem Wollastonprisma (5) angeordnet ist, daß eine λ/4-Platte (13) zwischen dem Wollastonprisma und dem strahlungsempfindlichen Detektorsystem (15) angeordnet ist, die optische Achse dieser Platte (13) sich unter einem Winkel von 45° mit den Polarisationsrichtungen der Teilbündel $(b_1, b_2)$ erstreckt, und daß ein Polarisationsanalysator (14) zwischen der λ/4-Platte (13) und dem Detektorsystem (15) angeordnet ist.

5. Vorrichtung nach Anspruch 3, dadurch gekennzeichnet, daß der Polarisationsanalysator (14) feststehend ist.

6. Vorrichtung nach Anspruch 3, dadurch gekennzeichnet, daß der Polarisationsanalysator (14) drehbar ist, und daß für den Analysator ein Positionsdetektionssystem (17, 18 19) vorgesehen ist.

7. Vorrichtung nach Anspruch 6, dadurch gekennzeichnet, daß die elektrischen Ausgänge des Positionsdetektionssystems (17, 18, 19) und des strahlungsempfindlichen Detektorsystems (15) an die Eingänge einer Phasenvergleichsschaltung (20) angeschlossen sind, deren Ausgangssignal $(Sc)$ den Zentrierfehler darstellt.

8. Vorrichtung nach Anspruch 6 oder 7, dadurch gekennzeichnet, daß das Positionsdetektionssystem eine Hilfsstrahlungsquelle (17) und einen Polarisator (18), die an einer Seite des Analysators (14) angeordnet sind, und einen strahlungsempfindlichen Detektor (19) enthält, der an der anderen Seite des Analysators angeordnet ist.

9. Vorrichtung nach Anspruch 5, dadurch gekennzeichnet, daß ein aktiver elektrooptischer (64) oder magnetooptischer Kristall (60) zum Drehen der Polarisationsrichtung des Bündels (b') aus der λ/4-Platte (13) zwischen dem Polarisationsanalysator (63) und der λ/4-Platte (13) angeordnet ist.

10. Vorrichtung nach Anspruch 9, dadurch gekennzeichnet, daß eine Phasenvergleichsschaltung (20) zum Vergleichen der Phase des Ausgangssignals ($S_{15}$) des strahlungsempfindlichen Detektorsystems (15) mit der Phase des Steuersignals (62, 65) für den aktiven Kristall vorgesehen ist.

11. Vorrichtung nach einem der Ansprüche 3 und 4 bis 10, dadurch gekennzeichnet, daß die Strahlungsquelle (1) ein linear polarisiertes Bündel ausgibt, dessen Azimut zu einer der optischen Achsen (7, 8) des Wollastonprismas (5) parallel verläuft, daß eine n • λ-Platte (2), worin $1/4 \leq n \leq 3/4$ ist, zwischen der Strahlungsquelle und dem Wollastonprisma angeordnet ist, die Platte zwischen zwei Stellungen derart schaltbar ist, daß der Azimut des Bündels aus dieser Platte zwischen 0° und 45° gegen die optischen Achsen des Wollastonprismas geschaltet wird, und daß das strahlungsempfindliche Detektorsystem (23, 24, 25, 26; 15'') zum Ausgeben von vier elektrischen Signalen ausgelegt ist, aus denen sowohl ein Grobzentrierungs-Fehlersignal ($S_x$, $S_y$) und ein Feinzentrierungs-Fehlersignal ($S_s$) ableitbar sind.

12. Vorrichtung nach einem oder mehreren der vorangehenden Ansprüche, mit einem strahlungsempfindlichen Detektorsystem (23, 24, 25, 26) zum Ausgeben von vier Ausgangssignalen, dadurch gekennzeichnet, daß im Strahlungsweg vor diesem Detektorsystem sowohl ein erster um eine erste Achse (71) drehbarer zusätzlicher Spiegel (70) als auch ein zweiter, um eine zweite Achse (73) senkrecht zur ersten Achse (71) drehbarer zusätzlicher Spiegel (72), angeordnet sind wobei der am strahlungsempfindlichen Detektorsystem gebildete Strahlungsfleck (27) mit Hilfe der Spiegel in zwei verschiedenen senkrecht zueinander verlaufenden Richtungen in der Ebene des Detektorsystems bewegbar sind, daß die vier Detektorsignale zu Steuersignalen ($S_y$, $S_z$) verarbeitet werden, mit denen die Spiegel (70, 72) derart eingestellt werden, daß die Mitte des Strahlungsflecks (27) mit der Mitte des des Detektorsystems (23, 24, 25, 26) zusammenfällt, wobei die Position der Spiegel den Zentrierfehler darstellen.

13. Vorrichtung nach einem oder mehreren der vorangehenden Ansprüche zum gleichzeitigen Detektieren der Zentrierfehler von zwei Flächen ($O_1$, $O_2$) eines Objekts, dadurch gekennzeichnet, daß die Vorrichtung außerdem einen zweiten Bündelaufspalter (5') zum Bilden eines dritten und eines vierten Teilbündels (63, 64), ein Linsensystem (9, 10) zwischen diesem Bündelaufspalter (5') und dem Objekt zum Richten der dritten und vierten Teilbündel ($b_3$, $b_4$) unter Winkeln von etwa 90° auf die zweite Fläche ($O_2$) sowie ein zweites strahlungsempfindliches Detektorsystem (15') enthält, das den dritten und vierten Teilbündel zugeordnet ist zum Abgeben eines Zentrierfehlers für die zweite Fläche ($O_2$).

14. Vorrichtung nach Anspruch 13, dadurch gekennzeichnet, daß ein Bündelumkehrelement (46) im Weg eines der an der zweiten Fläche ($O_2$) reflektierten dritten und vierten Teilbündel ($b_3$, $b_4$) angeordnet ist.

**Revendications**

1. Dispositif pour détecter un défaut de centrage d'une surface à symétrie de révolution d'un objet, lequel dispositif comporte une source de rayonnement (1) pour exposer une petite partie de la surface ($O_1$), un support rotatif (11) pour l'objet et un système de détection sensible au rayonnement (15) disposé dans le trajet d'un faisceau (b') provenant de la surface et délivrant un signal ($S_{15}$), qui constitue une mesure du défaut de centrage ($\varepsilon$) par rapport à l'axe de rotation (AR) du support, caractérisé en ce qu'un diviseur de faisceau (5; 50) pour la division du faisceau de rayonnement (b) en deux faisceaux partiels ($b_1$, $b_2$) de mesure et pour combiner les deux faisceaux partiels après réflexion par la surface ($O_1$) est disposé dans le trajet de rayonnement entre la source de rayonnement (1) et la surface à centrer ($O_1$), en ce qu'un système de lentilles (9, 10) dirigeant le faisceau partiel sous l'angle d'environ 90° sur la surface ($O_1$) est disposé entre le diviseur de faisceau et la surface et en ce que le signal de sortie ($S_{15}$) délivré par le système de détection (15) sensible au rayonnement montre, en présence d'un défaut de centrage ($\varepsilon$), une variation en synchronisme avec la rotation de l'objet, laquelle variation du signal de sortie représente une variation en différence de phase entre les deux faisceaux partiels provoquée par un défaut de centrage.

2. Dispositif selon la revendication 1, caractérisé en ce que le diviseur de faisceau (50) est formé par un miroir semi-transparent (51) sensible ou non à la polarisation disposé dans le trajet du faisceau et au moins un miroir complètement réflecteur (52) dans le trajet d'au moins l'un des faisceaux partiels ($b_1$).

3. Dispositif selon la revendication 1, caractérisé en ce que l'élément diviseur de faisceau est un prisme Wollaston (5), en ce que le faisceau provenant de la source et entrant dans le prisme de Wollaston est un faisceau polarisé dont l'azimut fait un angle d'environ 45° avec les axes optiques (7, 8) du prisme de Wollaston, en ce qu'une lame λ/4 (13), λ représentant la longueur d'onde du faisceau de rayonnement, est disposée dans le trajet de rayonnement entre le prisme de Wollaston (5) et le système de détection sensible au rayonnement (15), l'axe optique de ladite plaque formant un angle de 45° avec les directions de polarisation des faisceaux partiles ($b_1$, $b_2$) et en ce qu'un analyseur (14) de polarisation est disposé entre la lame λ/4 (13) et le système de détection (15).

4. Dispositif selon la revendication 1, caractérisé en ce que l'élément diviseur de faisceau est un prisme de Wollaston (5), en ce que la source de rayonnement est und laser Zeeman, en ce qu'une lame λ/4

(14), λ représentant la longueur d'onde du rayonnement, est disposée entre ce laser et le prisme de Wollaston (5), en ce qu'une lame λ/4 (13) est disposée entre le prisme de Wollaston et le système de détection sensible au rayonnement (15), l'axe optique de ladite lame (13) formant un angle de 45° avec les directions de polarisation des faisceaux partiels ($b_1$, $b_2$) et en ce qu'un analyseur de polarisation (14) est disposé entre la lame λ/4 (13) et le système de détection (15).

5. Dispositif selon la revendication 3, caractérisé en ce que l'analyseur de polarisation (14) est stationnaire.

6. Dispositif selon la revendication 3, caractérisé en ce que l'analyseur de polarisation (14) est rotatif et par disposition d'un système (17, 18, 19) pour détecter la position de l'analyseur.

7. Dispositif selon la revendication 6, caractérisé en ce que les sorties électriques du système de détection de position (17, 18, 19) et du système de détection sensible au rayonnement (15) sont connectées aux entrées d'un circuit de comparaison de phase (20), dont le signal de sortie (Sc) représente le défaut de centrage.

8. Dispositif selon la revendication 6 ou 7, caractérisé en ce que le système de détection de position comporte une source de rayonnement auxiliaire (17) et un polariseur (18), qui sont disposés d'un côté de l'analyseur (14) et un détecteur sensible au rayonnement (19), qui est disposé de l'autre côté de l'analyseur.

9. Dispositif selon la revendication 5, caractérisé en ce qu'un cristal électro-optique (64) ou magnéto-optique (60) actif pour la rotation de la direction de polarisation du faisceau (b') sortant de la lame λ/4 (13) est disposé entre l'analyseur de polarisation (63) et la lame λ/4 (13).

10. Dispositif selon la revendication 9, caractérisé en ce qu'un circuit de comparaison de phase (20) est disposé pour la comparaison de la phase du signal de sortie ($S_{15}$) du système de détection sensible au rayonnement (15) et la phase du signal de commande (62, 65) pour le cristal actif.

11. Dispositif selon l'une des revendications 3 et 4 à 10, caractérisé en ce que la source de rayonnement (1) délivre un faisceau polarisé linéairement, dont l'azimut est parallèle à l'un des axes optiques (7, 8) du prisme de Wollaston (5), en ce qu'une lame n • λ, (2), pour laquelle $1/4 \leq n \leq 3/4$, est disposée entre la source de rayonnement et le prisme de Wollaston, laquelle lame peut être commutée entre deux positions de façon que l'azimut du faisceau sortant de cette lame soit établi entre 0° et 45° par rapport aux axes optiques du prisme de Wollaston et en ce que le système de détection sensible au rayonnement (23, 24, 25, 26; 15″) est conçu pour fournir quatre signaux électriques à partir desquels peuvent être dérivés tant un signal de défaut de centrage grossier qu'un signal de défaut de centrage fin.

12. Dispositif selon l'une des revendications précédentes comportant un système de détection sensible au rayonnement (23, 24, 25, 26) qui délivre quatre signaux de sortie, caractérisé en ce que dans le trajet de rayonnement devant ce système de détection est disposé un premier miroir additionnel (70) qui peut pivoter autour d'un premier axe (71) ainsi qu'un deuxième miroir additionnel (72), qui peut pivoter autour d'un deuxième axe (73) perpendiculaire au premier axe (71), la tache de rayonnement (27) formée sur le système de détection sensible au rayonnement pouvant être déplacée à l'aide de ces miroirs dans deux directions perpendiculaires entre elles dans le plan du système de détection, en ce que les quatre signaux de détection sont transformées en signaux de commande ($S_y$, $S_z$) avec lesquels les miroirs (70, 72) sont établis de façon que le centre de la tache de rayonnement (27) coïncide avec le centre du système de détection (23, 24, 25, 26), les positions des miroirs représentant le défaut de centrage.

13. Dispositif selon l'une des revendications précédentes pour détecter simultanément les défauts de centrage de deux surfaces ($0_1$, $0_2$) d'un objet, caractérisé en ce qu'il comporte également un deuxième diviseur de faisceau (5′) pour la formation d'un troisième faisceau partiel et d'un quatrième faisceau partiel (63, 64), et un système de lentilles (9, 10) disposé entre ce diviseur de faisceau (5′) et l'objet pour diriger les troisième et quatrième faisceaux parties ($b_3$, $b_4$) sous des angles d'environ 90° sur la deuxième surface ($0_2$), et un deuxième système de détection sensible de rayonnement (15′) associé aux troisième et quatrième faisceaux partiels pour délivrer un signal de défaut de centrage pour la deuxième surface ($0_2$).

14. Dispositif selon la revendication 13, caractérisé en ce qu'un élément inverseur de faisceau (46) est disposé dans le trajet de l'un des troisième et quatrième faisceaux partiels ($b_3$, $b_4$) réfléchis par la deuxième surface ($0_2$).

FIG1

FIG2

FIG.3

FIG.4

FIG.5

FIG.6

FIG.7

FIG.8

FIG.9

FIG.10

FIG.11

EP 0 235 861 B1